# EUROPEAN PATENT APPLICATION

(11) **EP 1 547 667 A1**
(43) Date of publication of application: **29.06.2005**
(21) Application number: 04106902.2
(22) Date of filing: 22.12.2004
(51) Int. Cl.: B01D 53/50, C03B 5/00, F23J 15/00

(54) **Method of removing particulate from exhaust fumes, in particular of melting furnaces used in the glassmaking industry, and relative melting furnace**

(30) Priority: 23.12.2003 IT TO20031036
(71) Applicant: Ansaldo Ricerche S.p.A., 16161 Genova (IT); SCANDIUZZI COSTRUZIONI IMPIANTI SRL, 31040 VOLPAGO DEL MONTELLO (IT); STARA GLASS S.p.A., 16129 Genova (IT)
(72) Inventor: Zanzi, Franco, 16148, GENOVA (IT); Pelizza, Maria Luisa, 15059, VOLPEDO (IT); Guerreschi, Umberto, 16128, GENOVA (IT); Repetto, Francesco, 16016, COGOLETO (IT); Santero, Augusto, 16100, GENOVA (IT); Russo, Carmine, 84018, SCAFATI (IT); Larcieri, Filippo, 16149, GENOVA (IT)
(74) Representative: Jorio, Paolo, Dr. Ing.

(57) **Abstract**

There is described a method of removing fine (submicron) particulate from exhaust fumes (11) of a recuperative melting furnace for producing glass, the method including the steps of causing the particulate particles to adhere to much larger particles, and separating the resulting clusters by means of an inertial system (16). The method according to the invention provides for optimum heat recovery, by preheating combustion-supporting air fed to the furnace, permits use of sleeve filters (25), by cooling the exhaust fumes, and prevents particulate sticking to the exhaust conduits.

## Description

The present invention relates to a method of removing particulate from exhaust fumes of melting furnaces used in the glassmaking industry, and to the relative melting furnace.

In glassmaking, and particularly the manufacture of hollow glass, e.g. for bottles, numerous types of furnaces are used, including melting furnaces, which are substantially divided into two types: recuperative and regenerative. Recuperative furnaces are oil- or methane-fuelled, and are characterized by permitting heat recovery by means of recuperative heat exchangers. As compared with regenerative furnaces, recuperative furnaces are cheaper in terms of investment, are basically simpler by requiring no air flow and combustion product inversion, but involve higher energy, and therefore production, cost per kg of hollow glass.

For this reason, despite being more complicated, regenerative furnaces are those most widely used at present in the glassmaking industry.

The reason for the higher energy cost of recuperative furnaces substantially lies in the difficulty of recovering heat at low temperature (500-600°C). Heat is normally recovered in a heat exchanger, but is seriously impaired, in known recuperative furnaces, by the presence in the fumes of a low-melt particulate mainly comprising submicron sulphates, in particular sodium sulphate and other salts, originating from both the glass bath and the fuel.

Table 1 shows the chemical composition of one type of particulate present in the fumes:

**Table 1**

| Components | Concentration % |
|---|---|
| Sodium sulphate | 83.0 - 89.0 |
| Potassium sulphate | 3.3 - 9.0 |
| Calcium sulphate | 2.5 - 4.6 |
| Magnesium sulphate | 1.2 - 2.0 |
| Free crystalline silica | < 0.1 |

At the temperatures mentioned above, the particulate comprises soft, sticky (submicron) particles, and is therefore subject to what is commonly referred to as "sticking", i.e. the particles inside the low-temperature heat exchanger stick to the walls and form a layer of scale which is extremely hard to remove. Furthermore, this takes place faster in oil-fuelled as compared with more expensive methane-fuelled recuperative furnaces.

Particulate particle deposits on the walls of the heat exchanger drastically reduce the heat exchange coefficient, and therefore heat recovery efficiency, so much so that the temperature of the fumes cannot be lowered to a level permitting use of sleeve filters, which are extremely advantageous in removing other pollutants in the exhaust fumes.

Various solutions have been tried and are currently being researched to solve this drawback. In particular, attempts have been made to cool the fumes to a temperature of around 200°C by washing in water, and then filter the fumes using sleeve filters, but feeding water into the fumes increases maintenance of the filter. Alternatively, cold-air cooling has been attempted, but greatly increases fume flow for processing, and therefore the size and cost of the sleeve filter required. Another alternative is to filter the fumes using electrostatic filters operating at temperatures of around 400°C. Such filters, however, are considered pollutant, by failing to conform with European regulations governing glass furnace emissions.

It is an object of the present invention to eliminate all the aforementioned drawbacks, and in particular to provide a method of removing particulate from exhaust fumes of melting furnaces, and comprising means ensuring effective heat recovery and, at the same time, permitting use of sleeve filters.

According to the present invention, there is provided a method as claimed in Claim 1.

According to the present invention, there is also provided a melting furnace as claimed in Claim 10.

The dependent Claims also describe further preferred embodiments of the present invention.

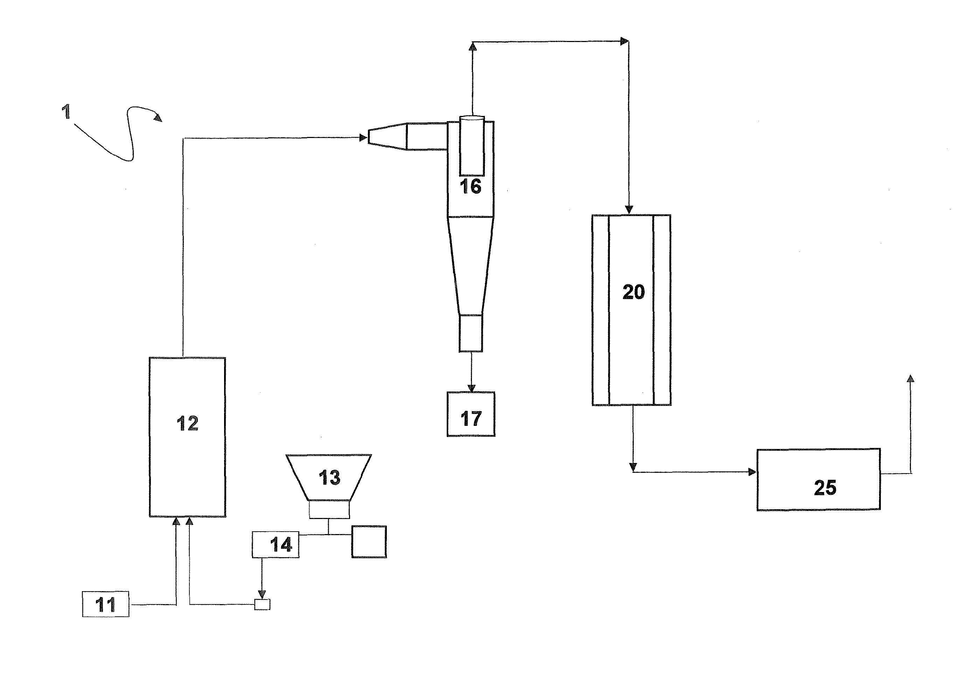

A non-limiting embodiment of the invention will be described by way of example with reference to the accompanying drawing, which shows a preferred operating scheme of a melting furnace in accordance with the present invention.

The method of treating melting furnace exhaust fumes according to the present invention comprises a particulate removal step prior to a heat recovery step.

The removal step comprises the steps of causing the particulate to adhere to larger particles injected into a mixing chamber, to form clusters, and then separating the clusters. The separating step is preferably performed in an inertial system.

The separating step is followed by a heat recovery step using a heat exchanger.

A filtering step is then performed to remove further pollutants from the exhaust fumes.

Various substances can be used as capture particles, providing firm adhesion of the particulate is achieved. A substance selected from the group comprising calcium carbonate, calcium oxide, and dolomite, is preferably used; and the capture particles are preferably 40 to 100 µm in size.

The substances of which the capture particles are made may form part of the glass furnace batch, so that, once separated from the fumes, the clusters formed may advantageously be recycled back into the furnace.

The hollow-glass melting furnace according to the present invention is shown partly and schematically in the accompanying drawing, in which, 1 indicates an exhaust fume treating assembly, 20 indicates a heat exchanger for recovering heat, and 25 indicates a sleeve filter for removing further pollutants from the fumes.

Treating assembly 1 comprises a silo 13, a mixing chamber 12, and a cyclone 16.

The capture particles are stored in silo 13, from where they are fed to an air conveyor system 14 and injected into mixing chamber 12. Inside mixing chamber 12, the capture particles come into contact with the exhaust fumes 11 from the melting furnace and containing the pollutant particulate to be removed. The particulate adheres to the capture particles by inelastic collision, using the sticking property of the particulate itself.

Mixing chamber 12 is defined by a tubular reactor insulated to minimize heat dispersion and maximize heat recovery. The reactor is sized to ensure effective adhesion of the particulate to the capture particles, the effectiveness of which substantially depends on contact time, fume velocity, and the fluid-dynamic conditions inside the chamber.

From mixing chamber 12, the fumes are fed to an inertial separator, e.g. cyclone 16, which exploits the difference in density between solid and fumes to separate said clusters from the fumes without affecting fume temperature.

The clusters are collected inside a chamber 17, while the purified fumes, by now containing a small percentage of pollutants, are fed to low-temperature heat exchanger 20.

In heat exchanger 20, the fumes are brought to a temperature of around 200°C, and are then fed to the sleeve filter, where the fumes are further purified to reduce the concentration of substances in the fumes other than the particulate already removed.

The advantages of the method according to the present invention will be clear from the foregoing description.

Treating the exhaust fumes advantageously prevents scale forming inside the exchanger, thus achieving effective heat recovery, so that combustion-supporting air fed into the melting furnace can be preheated to a higher temperature, and overall costs reduced.

Moreover, permitting the use of sleeve filters, the method also provides for reducing pollutant emissions.

Clearly, changes may be made to the method as described herein without, however, departing from the scope of the present invention.

In particular, changes may be made to the way in which the capture particles and exhaust fumes are mixed, and to the chemical nature of the capture particles.

## Claims

1. A method of removing particulate from exhaust fumes, in particular of melting furnaces used in the glassmaking industry, said method comprising a heat recovery step, and being **characterized by** also comprising the steps of:
- causing the particulate in the exhaust fumes to adhere to capture particles to form clusters;
- separating said clusters from said exhaust fumes to remove said particulate from said exhaust fumes.

2. A method as claimed in Claim 1, **characterized in that** said step of separating said clusters is followed by the heat recovery step.

3. A method as claimed in Claim 1 or 2, **characterized in that** said heat recovery step is performed using a heat exchanger (20).

4. A method as claimed in any one of Claims 1 to 3, **characterized in that** said heat recovery step is followed by a filtration step in a sleeve filter (25).

5. A method as claimed in any one of the foregoing Claims, **characterized in that** said step of causing said particulate to adhere to said capture particles is performed by mixing said exhaust fumes, comprising said particulate, with a stream of said capture particles.

6. A method as claimed in any one of the foregoing Claims, **characterized in that** said step of separating said clusters from said exhaust fumes is performed in an inertial system (16).

7. A method as claimed in Claim 6, **characterized in that** said inertial system is a cyclone (16).

8. A method as claimed in any one of the foregoing Claims, **characterized in that** said capture particles are preferably selected from the group comprising calcium carbonate, calcium oxide, and dolomite.

9. A method as claimed in Claim 8, **characterized in that** said capture particles are 30 to 60 µm in size.

10. A melting furnace for producing glass, and comprising a treating assembly (1) for treating particulate in exhaust fumes (11); said treating assembly comprising heat recovery means (20); and the furnace being **characterized in that** said treating assembly also comprises means (12) for causing said particulate to adhere to capture particles to form clusters; and separating means (16) for separating said clusters from said exhaust fumes to remove said particulate from said exhaust fumes.

11. A furnace as claimed in Claim 10, **characterized in that** said heat recovery means comprise a heat exchanger (20).

12. A furnace as claimed in Claim 11, **characterized by** also comprising filtration means (25).

13. A furnace as claimed in Claim 12, **characterized in that** said filtration means comprise a sleeve filter (25) .

14. A furnace as claimed in any one of Claims 10 to 13, **characterized in that** said separating means comprise an inertial system (16).

15. A furnace as claimed in Claim 14, **characterized in that** said inertial system is a cyclone (16).

16. A furnace as claimed in any one of Claims 10 to 16, **characterized by** being oil-fuelled.
